(19) Europäisches Patentamt
European Patent Office
Office européen des brevets

(11) **EP 2 064 539 B1**

(12) **EUROPÄISCHE PATENTSCHRIFT**

(45) Veröffentlichungstag und Bekanntmachung des Hinweises auf die Patenterteilung:
**14.12.2011  Patentblatt 2011/50**

(21) Anmeldenummer: **07817514.8**

(22) Anmeldetag: **12.09.2007**

(51) Int Cl.:
**G01N 29/04** *(2006.01)*       **G01N 29/44** *(2006.01)*
**G01N 21/88** *(2006.01)*

(86) Internationale Anmeldenummer:
**PCT/DE2007/001641**

(87) Internationale Veröffentlichungsnummer:
**WO 2008/031423 (20.03.2008 Gazette 2008/12)**

(54) **VERFAHREN ZUM PRÜFEN EINER LAGERKOMPONENTE MITTELS ULTRASCHALL UND OPTISCHER INSPEKTION**

METHOD FOR TESTING A BEARING COMPONENT BY MEANS OF ULTRASOUND AND OPTICAL INSPECTION

PROCÉDÉS DE CONTRÔLE D'UN COMPOSANT DE PALIER PAR INSPECTION ULTRASONORE ET OPTIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.09.2006   DE 102006043570**

(43) Veröffentlichungstag der Anmeldung:
**03.06.2009   Patentblatt 2009/23**

(73) Patentinhaber: **Schaeffler Technologies GmbH & Co. KG**
**91074 Herzogenaurach (DE)**

(72) Erfinder:
• **BEER, Oskar**
**84032 Landshut (DE)**
• **STREIT, Edgar**
**97711 Poppenlauer (DE)**

(56) Entgegenhaltungen:
**EP-A- 1 302 769     WO-A-02/44709**
**US-A- 6 062 084**

## Beschreibung

Die Erfindung liegt auf dem Gebiet der Lagerkomponenten, die für besonders kritische und hochbeanspruchte Einsatzfälle, wie beispielsweise in der Luft- und Raumfahrt, konzipiert sind. Der Begriff Lagerkomponente ist im Rahmen der vorliegenden Erfindung weit auszulegen und umfasst die lasttragenden Teile eines Lagers, wie Lagerringe und insbesondere Wälzlagerkörper, vor allem Wälzlagerkugeln.

Solche Lagerkomponenten werden z.B. in Hauptwellenlagerungen von Gasturbinen und Getrieben, in Lagerungen für Hubschrauber sowie in Antriebsaggregaten von Trägerraketen eingesetzt. Sie sind dort im Betrieb außerordentlich hohen Beanspruchungen ausgesetzt und müssen auch unter extremen Umgebungs- bzw. Betriebstemperaturen bei hoher Wälz- und Gleitbeanspruchung zwischen den eigentlichen Wälzkörpern und den zugeordneten Laufbahnen entsprechender Lagerkomponenten bzw. Lagerringen ein zuverlässiges und verschleißfreies Betriebsverhalten zeigen.

Aufgrund dieser äußerst hohen Beanspruchungen besteht die Gefahr der Rissbildung an Fehlstellen innerhalb des Materials und anschließender Risswanderung an den hoch beanspruchten Bereichen der Lagerkomponente. Die im Betrieb dann auftretende weitere Belastung derartiger Mikrorisse beispielsweise durch das Überrollen in Wälzlagern führt zu einem Risswachstum, das ungünstigstenfalls zum Bauteilversagen führen kann. Metallurgische bzw. werkstofftechnische Ursachen für das Entstehen derartiger Mikrorisse sind u. a. Inhomogenitäten im Werkstoff, bearbeitungsbedingte Materialschädigungen an der Oberfläche oder am bzw. im oberflächennahen Bereich. Bei den eingangs genannten bevorzugten Einsatzgebieten für derartige Lagerungen ist verständlich, dass Lagerschäden dort zu erheblichen Komplikationen und äußerst hohen Folgeschäden führen können.

Deshalb wird von derartigen Lagerkomponenten eine äußerst hohe Zuverlässigkeit bzw. verschwindende Ausfallwahrscheinlichkeit gefordert. Um dieser Forderung nachzukommen, können die Lagerkomponenten einer 100%igen, zerstörungsfreien Prüfung unterzogen werden. Als Prüfverfahren kommen in Betracht so genannte Wirbelstromprüfungen, Farbeindringprüfungen, magnetische Rissprüfungen und gegebenenfalls individuelle, durch Prüfpersonen durchzuführende Sichtprüfungen.

Eine derartige Qualitätsprüfung ist bisher aber unbefriedigend. Einige Prüfverfahren, wie beispielsweise die Wirbelstromprüfung oder magnetische Rissprüfung, können nur bei metallischen Lagerkomponenten angewendet werden. [Bei der Wirbelstromprüfung ist üblicherweise nur eine Prüftiefe in der Größenordnung von 30 bis 60 $\mu$m realisierbar]. Auch können übliche Fehler, die in der Größenordnung ab 50 $\mu$m liegen, nicht immer zuverlässig detektiert werden.

Die Sichtprüfungen sind hinsichtlich der maximal erkennbaren Fehlergröße und Fehlerart von der Erfahrung und dem Leistungsvermögen des Prüfers bzw. des menschlichen Auges abhängig.

Insgesamt können mit den genannten Prüfverfahren Mikrorisse, Einschlüsse und Inhomogenitäten bzw. Fehlstellen nur an der Oberfläche und nur bis zu einer relativ geringen Tiefe unterhalb der Oberfläche detektiert werden.

Die WO02/44709 beschreibt ein Verfahren zum Prüfen von Röhren durch visuelle Oberflächen inspektion mittels einer Kamera sowie in einem zweiten Schritt der Wanddickenbestimmung mittels eines Ultraschallpuls-Echo-Verfahrens.

Bei den eingangs erwähnten Hochleistungs-Lagerkomponenten ist allerdings - je nach Betriebsbedingungen und Schmierzustand des Lagers - damit zu rechnen, dass signifikante Materialbelastungen in tieferen Materialschichten auftreten. Dadurch können dort verborgene Fehlstellen und Inhomogenitäten zu Rissbildungen führen. Diese in größeren Tiefen befindlichen Fehlstellen können - wenn überhaupt - erst bei vergleichsweise großer Ausdehnung (so genanter Fehlergröße) mit den vorstehend genannten Verfahren erkannt werden.

Vor diesem Hintergrund besteht die Aufgabe der vorliegenden Erfindung darin, ein Verfahren anzugeben, das zuverlässig sicherstellt, dass bei einer geprüften Lagerkomponente die Gewähr dafür besteht, dass sowohl die Lauffläche als auch ein darunter liegender lasttragender Bereich als vollständig fehlerfrei sind.

Diese Aufgabe wird erfindungsgemäß gelöst durch ein Verfahren zum Prüfen einer Lagerkomponente, bei dem eine Materialprüftiefe bestimmt wird, innerhalb derer der betriebsgemäß auftretende Punkt der höchsten mechanischen Belastung liegt, in einem ersten Teilprüfschritt die Lagerkomponente einer Ultraschallprüfung unterzogen wird, mit der der unterhalb der Lauffläche liegende Materialbereich mindestens bis zur Materialprüftiefe mittels Ultraschall auf Fehler geprüft wird, in einem zweiten Teilprüfschritt eine vollständige optische Prüfung der Lauffläche vorgenommen wird, bei der der Ist-Oberflächenzustand der Lauffläche mit einem Soll-Oberflächenzustand verglichen wird, und wobei die Lagerkomponente nur dann als fehlerfrei klassifiziert wird, wenn beide Teilprüfschritte ein fehlerfreies Ergebnis ergeben.

Ein erster wesentlicher Aspekt der Erfindung besteht darin, dass unter Berücksichtigung der konkreten Ausgestaltung, Auslegung und dem zukünftigen Einsatzbereich der Lagerkomponente und der dabei herrschenden Betriebsbedingungen eine Materialprüftiefe bestimmt und festgelegt wird. Innerhalb dieser Materialprüftiefe liegt der betriebsgemäß auftretende Punkt der höchsten Belastung. Obwohl dieser Bereich natürlich je nach Dimensionierung des Lagers, Anwendungsfall und beispielsweise Nenndurchmesser des Lagers variieren kann, liegen durch die Erfinder festgestellte, übliche Materialprüftiefen in der Größenordnung bis ca. 400 $\mu$m.

Ein weiterer wesentlicher Aspekt der Erfindung besteht darin, dass - vorzugsweise bei einer vollständigen, d.h. 100%igen Bauteilprüfung - zunächst die Lagerkomponente in dem ersten Teilprüfschritt einer Ultraschallprüfung unterzogen wird. Mit dieser Ultraschallprüfung kann insbesondere zuverlässig festgestellt werden, ob unterhalb der Lauffläche liegende, bis zur Materialprüftiefe reichende Fehler in dem Materialbereich vorliegen, und zwar in einem sehr fein auflösenden Untersuchungsbereich, so dass durch aus Fehler mit einer Größe oder einem Durchmesser ab ca. 50 μm erkannt werden können.

Der Begriff Fehler ist Rahmen der vorliegenden Erfindung weit zu verstehen und umfasst unter anderem, ohne aber hierauf beschränkt zu sein, die eingangs genannten, zu Mikrorissen führenden Fehlstellen wie beispielsweise Einschlüsse, Inhomogenitäten und Fehlstellen.

Ein wesentlicher Vorteil des erfindungsgemäßen Verfahrens besteht damit darin, dass durch die Ultraschallprüfung Fehler ab einer kritischen Fehlergröße (z.B. 50 μm), im Werkstoff bis zur Materialprüftiefe zuverlässig erkannt werden können. Besonders vorteilhaft ist dabei, dass das erfindungsgemäße Verfahren auch für nicht-magnetische und nicht-metallische Werkstoffe (z.B. Keramik) für die Lagerkomponenten geeignet ist, da es nicht auf elektrischen und/oder magnetischen Wirkprinzipien basiert.

Parallel oder sequenziell wird in dem zweiten Teilprüfschritt eine vollständige optische Prüfung der Lauffläche vorgenommen, so dass zuverlässig auf der Lauffläche bzw. Komponentenoberfläche bestehende Fehler erkannt werden.

Erfindungsgemäß ist weiterhin vorgesehen, dass die geprüfte Lagerkomponente nur dann als fehlerfrei eingestuft wird, wenn in beiden Teilprüfschritten ein fehlerfreies Ergebnis festgestellt worden ist. Unter fehlerfreiem Ergebnis ist in diesem Zusammenhang selbstverständlich auch zu verstehen, dass die detektierten bzw. detektierbaren Fehler unterhalb einer noch zulässigen Toleranzgrenze liegen. Diese Toleranzgrenze richtet sich - wie nachfolgend anhand des Ausführungsbeispiels noch näher erläutert - u. a. auch nach den Mechanismen bzw. Strukturen bei der durch Fehler verursachten Rissausbildung in dem jeweiligen speziellen Lagerkomponentenmaterial und Einsatzfall.

Insgesamt bietet das erfindungsgemäße Verfahren ein elegantes, zerstörungsfreies Prüfverfahren insbesondere für Wälzlagerkomponenten, und besonders bevorzugt für Wälzlagerkugeln, das durch die Kombination zweier Teilprüfschritte ein Höchstmaß an Sicherheit hinsichtlich der Komponentenlebensdauer ermöglicht.

Nach einer vorteilhaften Ausgestaltung des erfindungsgemäßen Verfahrens wird die optische Prüfung automatisiert mittels einer Hochgeschwindigkeitskamera vorgenommen. Diese kann in bevorzugter Weise den jeweiligen Ist-Oberflächenzustand aufnehmen und beispielsweise in digitalisierter Form mit einem gespeicherten Soll-Oberflächenzustand vergleichen. Bei durch Fehler verursachten signifikanten Abweichungen wird dann ein negatives Prüfergebnis ausgewiesen.

Die Erfindung wird nachfolgend anhand einer Zeichnung beispielhaft weiter erläutert, wobei die dargestellten speziellen Ausführungsformen und Beispiele keine Einschränkung der Erfindung bedeuten. Es zeigen:

Figur 1     zum grundsätzlichen Verständnis der Erfindung beispielhaft die Risswachstumsgeschwindigkeit in Abhängigkeit von dem Spannungsintensitätsfaktor bei schwingender Beanspruchung,

Figur 2     schematisch die kritische Risswachstumsgeschwindigkeit,

Figur 3     Vergleichsspannungen in Abhängigkeit der Tiefe für verschiedene Werte des Reibkoeffizienten,

Figur 4     schematisch den Ablauf des erfindungsgemäßen Verfahrens und

Figur 5     ein Detail aus Figur 4.

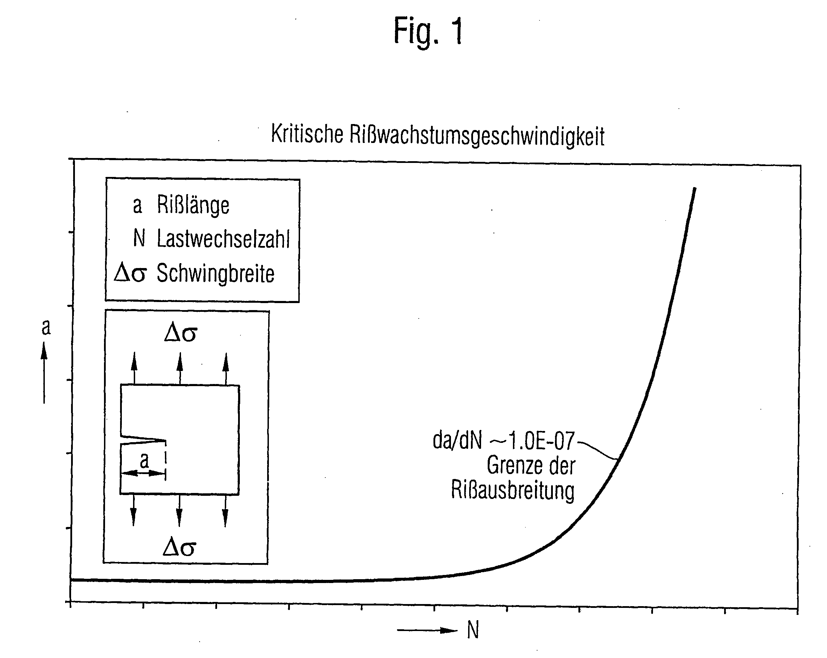

Figur 1 zeigt schematisch die kritische Risswachstumsgeschwindigkeit unterhalb bzw. oberhalb der kritischen Fehlergröße / Grenze der Rissausbreitung, wobei die Risslänge a in Abhängigkeit von der Lastwechselzahl N dargestellt ist. Man erkennt einen deutlichen Anstieg der Risslänge (Grenze der Rissausbreitung; da/dN ~ 10-7 Lastwechsel). Mit anderen Worten: Zunächst unerkannt gebliebene, vergleichsweise kleine Fehler können über die Anzahl der Lastwechsel zu einer relativ plötzlichen und dann dramatischen Rissausbreitung führen.

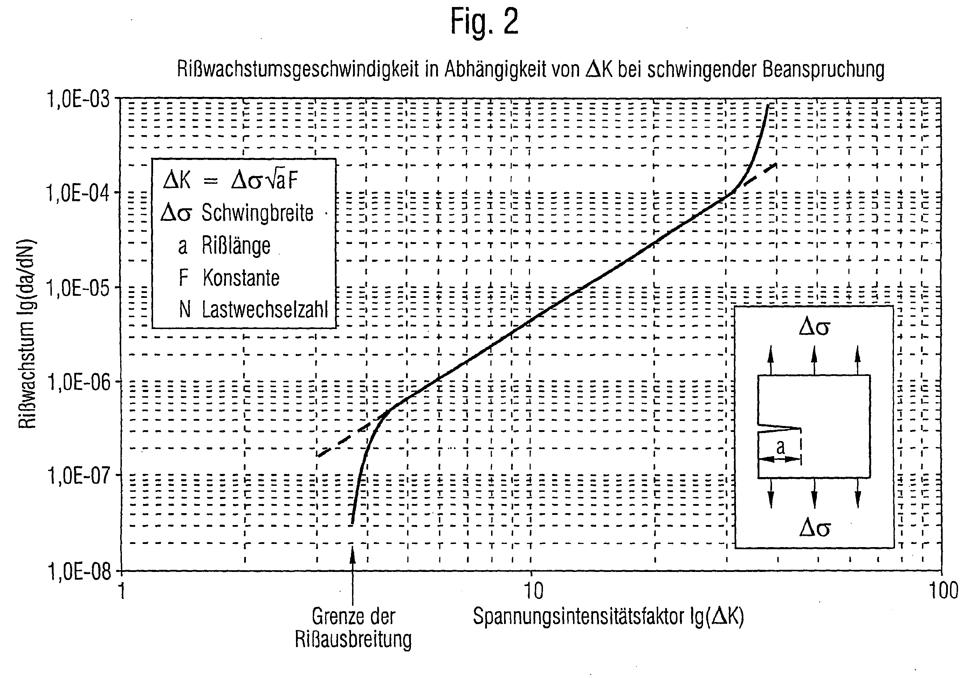

Zum weiteren Verständnis ist in Figur 2 (logarithmisch) dargestellt, dass ausgehend von der Grenze der Rissausbreitung in Abhängigkeit von dem Spannungsintensitätsfaktor lg(ΔK) das Risswachstum lg (da/dN) dramatisch zunimmt.

Bei schwingender Beanspruchung ist also eine deutlich erhöhte Risswachstumsgeschwindigkeit ab einem bestimmten Spannungsintensitätsfaktor erkennbar, der gemäß der Formel

$$\Delta K = \Delta\sigma * \sqrt{a} * F,$$

mit:

$\Delta\sigma$     Schwingbreite
a     Risslänge
F     Konstante
N     Lastwechselzahl

proportional der Schwingbreite bzw. der Wurzel aus der Risslänge ist.

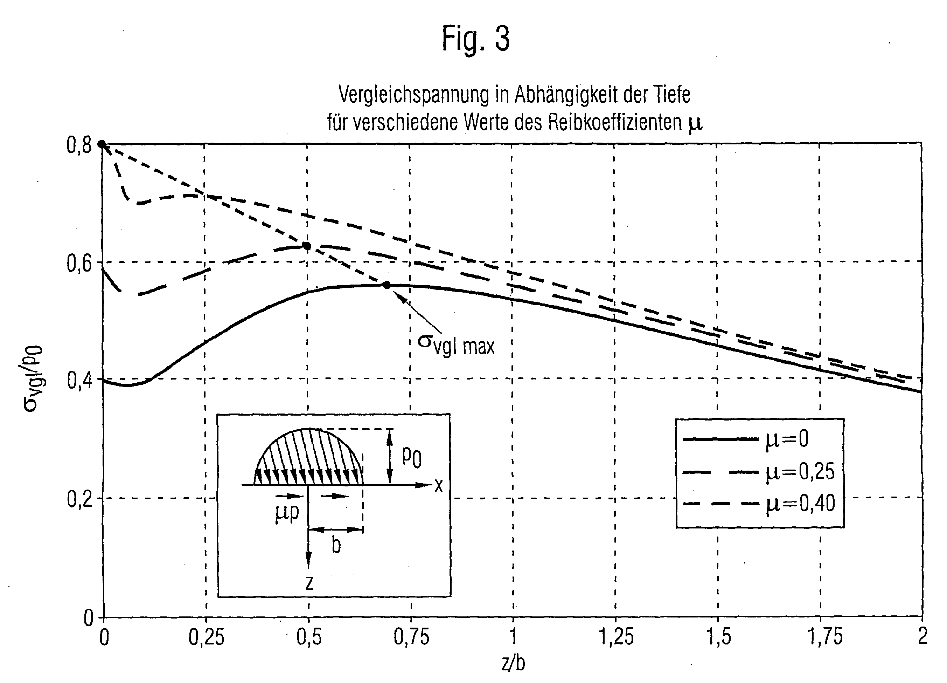

Figur 3 verdeutlicht schematisch die Veränderung in der Lage des so genannten Punktes höchster Belastung (Pmax), der grundsätzlich bei schlechter Schmierung in Richtung Lauffläche bzw. Komponentenoberfläche wandert. Beispielhaft sind die Verhältnisse bzw. die Lage der Vergleichsspannung σvglmax (Punkt der höchsten Belastung) im Verhältnis zu dem Pressung im Wälzkontakt po für eine ideale Schmierung (Reibkoeffizient $\mu = 0$) eine beispielsweise durch Schmiermittelmangel oder Überhitzung verschlechterte Schmiersituation ($\mu = 0,25$) und für eine sehr schlechte Schmierung ($\mu = 0,4$) in Abhängigkeit der Tiefe dargestellt. Man erkennt, dass die maximale Vergleichsspannung/po sich von einem Wert von ca. 0,55 bei einem Tiefen/Breitenverhältnis z/b der Kontaktellipse von ca. 0,7 über einen Vergleichsspannungswert/po von 0,62 bei z/b ≈ 0,5 bis zu einem Vergleichsspannungswert/po von ca. bei z/b ≈ 0,0 bewegt, wobei Letztere quasi unmittelbar in der Lauffläche bzw. unterhalb der Komponentenoberfläche liegt.

Auf diese Weise sind für verschiedene Betriebsparameter die jeweiligen Lagen des Punktes höchster Belastung ermittelt.

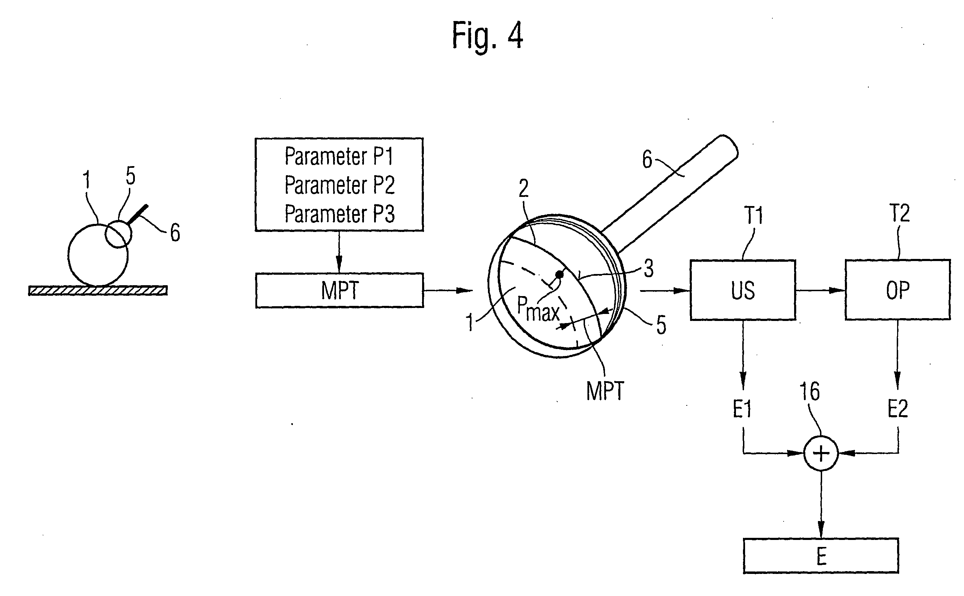

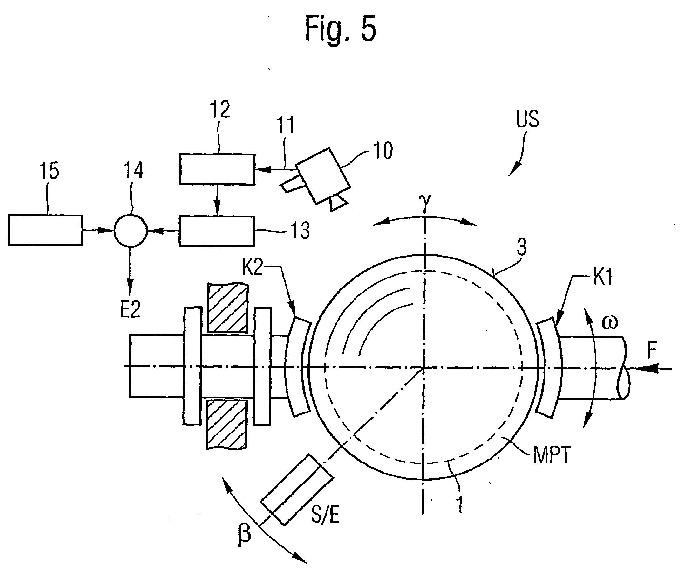

Vor diesem Hintergrund sei nun im Zusammenhang mit den Figuren 4 und 5 das erfindungsgemäße Verfahren im Einzelnen beschrieben. Eine Lagerkomponente 1 in Form einer Kugellagerkugel wird eingangs des Verfahrens zur Prüfung bereitgestellt. Aufgrund der Parameter sowohl der Lagerkomponente 1 (beispielsweise Material, Härtung, Dimensionierung etc.) als auch der zukünftigen zu erwartenden Betriebsbedingungen werden Parameter P1, P2, P3... zur Verfügung gestellt. Mit diesen wird aus Erfahrungswerten (vergleiche dazu beispielsweise Figur 3) die Lage des Punktes der höchsten mechanischen Belastung Pmax bestimmt. Dies ist in Figur 4 nur schematisch für einen Bereich 2 der Oberfläche 3 der Kugellagerkugel 1 (symbolisiert durch einen Ausschnitt 5, der andeutungsweise durch eine Lupe 6 symbolisiert) vergrößert dargestellt. Damit ergibt sich eine Materialprüftiefe MPT, innerhalb dieser der Punkt Pmax betriebsgemäß liegt.

Davon ausgehend wird in einem ersten Schritt die Lagerkomponente 1 - wie alle übrigen, nicht dargestellten Lagerkomponenten zur Erzielung einer 100%igen Prüfung - einem ersten Teilprüfschritt T1 in Form einer Ultraschallprüfung US zugeführt.

Parallel oder (wie im dargestellten Ausführungsbeispiel) sequenziell wird die Lagerkomponente 1 dann einem zweiten Teilprüfschritt T2 zugeführt, der eine optische Prüfung OP umfasst.

Wie Figur 5 in vergrößerter Darstellung zeigt, ist eine Ausgestaltungsmöglichkeit der Ultraschallprüfung US folgendermaßen: Die Lagerkomponente 1 wird von einer axialbeweglichen Kalotte K1 mit einer Andruckkraft FA gegen eine zweite, feste Kalotte K2 gedrückt und in Rotation mit einer Winkelgeschwindigkeit w versetzt. Für die Prüfung ist ein kombinierter UltraschallSender/Empfänger S/E vorgesehen. Dieser führt während der Prüfung eine Schwenkbewegung um den Winkel β aus. Da bei dieser Messung der jeweils von der Kalotte K1 bzw. K2 bedeckte Bereich der Lagerkomponente 1 nicht untersucht werden kann, wird ein zweiter Messvorgang durchgeführt, bei dem die Lagerkomponente gegenüber ihrer ersten Messlage um einen Winkel γ gedreht ist, so dass nun auch die ursprünglich von den Kalotten K1, K2 bedeckten Bereiche untersucht werden können.

Sofern bei dieser Untersuchung kein Fehler (jedenfalls aber kein Fehler, der oberhalb einer zulässigen Toleranzgrenze liegt) innerhalb der Materialprüftiefe MPT festgestellt wird, wird ein positives Prüfergebnis E1 generiert und ausgegeben.

In dem zweiten Teilprüfschritt wird eine vollständige optische Prüfung der Lauffläche 3 der Lagerkomponente 1 vorgenommen. Dabei wird mittels einer Hochgeschwindigkeitskamera 10 ein vollständiges Bild der Lauffläche (Oberfläche) 3 abgetastet. Wie in Figur 5 nur schematisch angedeutet, kann die Hochgeschwindigkeitskamera 10 so angeordnet bzw. bewegt sein, dass sie die Lauffläche ähnlich der Ultraschallprüfung abtastet. Das Abtastergebnis 11 repräsentiert damit den Ist-Oberflächenzustand 12, der - ggf. nach Digitalisierung 13 - in einem Vergleicher 14 mit dem Soll-Oberflächenzustand 15 einer idealen Lagerkomponente verglichen wird. Wenn hier keine signifikanten, einen Fehler identifizierenden Abweichungen festgestellt werden, ergibt sich ein positives Prüfergebnis E2. Die beiden Prüfergebnisse E1 und E2 werden in einer Auswertelogik 16 (Figur 4) verknüpft und nur bei Vorliegen beider positiver Prüfergebnisse ein positives Endprüfergebnis E generiert.

**Bezugszeichenliste**

1    Lagerkomponente (Kugellagerkugel)

2    Bereich

3    Oberfläche

5    Ausschnitt

6    Lupe

10   Hochgeschwindigkeitskamera

11   Abtastergebnis

12   Ist-Oberflächenzustand

13   Digitalisierung

14   Vergleicher

| 15 | Soll-Oberflächenzustand |
| 16 | Auswertelogik |
| a | Risslänge |
| E | Endprüfergebnis |
| E1, E2 | Prüfergebnis |
| F | Konstante |
| FA | Andruckkraft |
| K1 | Kalotte |
| K2 | Kalotte |
| MPT | Materialprüftiefe |
| N | Lastwechselzahl |
| OP | Optische Prüfung |
| P1, P2, P3 | Parameter |
| Pmax | Punkt der höchsten mechanischen Belastung |
| S/E | Ultraschall-Sender/Empfänger |
| T1 | erster Teilprüfschritt |
| T2 | zweiter Teilprüfschritt |
| US | Ultraschallprüfung |
| β | Winkel |
| γ | Winkel |
| μ | Reibkoeffizient |
| ω | Winkelgeschwindigkeit |

**Patentansprüche**

1. Verfahren zum Prüfen einer Lagerkomponente (1), bei der eine Lauffläche (3) und ein darunter liegender lasttragender Bereich (2) vollständige Fehlerfreiheit aufweisen müssen, bei dem

    - eine Materialprüftiefe (MPT) bestimmt wird, innerhalb derer der betriebsgemäß auftretende Punkt ($P_{max}$) der höchsten mechanischen Belastung liegt,
    - in einem ersten Teilprüfschritt (T1) die Lagerkomponente (1) einer Ultraschallprüfung (US) unterzogen wird, mit der der unterhalb der Lauffläche (3) liegende Materialbereich (2) mindestens bis zur Materialprüftiefe (MPT) mittels Ultraschall auf Fehler geprüft wird,
    - in einem zweiten Teilprüfschritt (T2) eine vollständige optische Prüfung (OP) der Lauffläche (3) vorgenommen wird, bei der der Ist-Oberflächenzustand (12) der Lauffläche (3) mit einem Soll-Oberflächenzustand (14) verglichen wird, und
    - wobei die Lagerkomponente (1) nur dann als fehlerfrei klassifiziert wird, wenn beide Teilprüfschritte ($T_1$, T2) ein fehlerfreies Ergebnis (E1, E2) ergeben.

2. Verfahren nach Anspruch 1, wobei die optische Prüfung (OS) automatisiert mittels einer Hochgeschwindigkeitskamera (10) vorgenommen wird.

**Claims**

1. Method for testing a bearing component (1), in the case of which a running surface (3) and a load-bearing region (2) located thereunder must be completely free from defects, in the case of which method

    - a material testing depth (MPT) is determined within which the point ($P_{max}$) of highest mechanical loading occurring during operation is located,
    - in a first partial testing step (T1) the bearing component (1) is subjected to ultrasonic testing (US), with the aid of which the material region (2) located under the running surface (3) is tested for defects by means of ultrasound at least down to the material testing depth (MPT),
    - in a second partial testing step (T2) a complete optical test (OP) of the running surface (3) is undertaken, during which the actual surface condition (12) of the running surface (3) is compared with a desired surface condition (14), and
    - in which the bearing component (1) is classified as free from defects only when both partial testing steps (T1, T2) yield a result (E1, E2) free from defects.

2. Method according to Claim 1, in which the optical test (OS) is undertaken in automated fashion by means of a high speed camera (10).

**Revendications**

1. Procédé de vérification d'un composant de palier (1) dont une surface de roulement (3) et une zone (2) sous-jacente de support de charge doivent présenter une absence complète de défaut, et dans lequel :

- une profondeur (MPT) de vérification du matériau à l'intérieur de laquelle le point ($P_{max}$) de plus haute charge mécanique survenant en fonctionnement est situé est définie,
- dans une première étape (T1) de vérification partielle, le composant de palier (1) subit un test (US) aux ultrasons par lequel la présence de défauts est vérifiée au moyen d'ultrasons dans la partie (2) de matériau situé en dessous de la surface de roulement (3), au moins jusqu'à la profondeur (MPT) de vérification du matériau,
- dans une deuxième étape (T2) de vérification partielle, une vérification optique complète (OP) de la surface de roulement (3) dans laquelle l'état de surface effectif (12) de la surface de roulement (3) est comparé à un état de consigne (14) de la surface est réalisée,
- le composant de palier (1) n'étant classé comme étant sans défaut que si les deux étapes partielles de vérification (T1, T2) donnent un résultat (E1, E2) caractéristique d'une absence de défaut.

2. Procédé selon la revendication 1, dans lequel la vérification optique (OS) est réalisée de manière automatique au moyen d'une caméra (10) à haute vitesse.

# Fig. 1

## Kritische Rißwachstumsgeschwindigkeit

a  Rißlänge

N  Lastwechselzahl

$\Delta\sigma$  Schwingbreite

$\Delta\sigma$

a

$\Delta\sigma$

a

da/dN ~1.0E-07
Grenze der
Rißausbreitung

N

EP 2 064 539 B1

# Fig. 2

Rißwachstumsgeschwindigkeit in Abhängigkeit von $\Delta K$ bei schwingender Beanspruchung

$$\Delta K = \Delta\sigma\sqrt{a}\,F$$

$\Delta\sigma$  Schwingbreite

a  Rißlänge

F  Konstante

N  Lastwechselzahl

Rißwachstum lg(da/dN)

Grenze der
Rißausbreitung

Spannungsintensitätsfaktor lg($\Delta K$)

EP 2 064 539 B1

Fig. 3

Vergleichsspannung in Abhängigkeit der Tiefe
für verschiedene Werte des Reibkoeffizienten $\mu$

Fig. 4

# Fig. 5

**EP 2 064 539 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0244709 A